# EUROPEAN PATENT APPLICATION

(11) **EP 1 962 271 A2**
(43) Date of publication of application: **27.08.2008**
(21) Application number: 08002010.0
(22) Date of filing: 04.02.2008
(51) Int. Cl.: G09G 3/36

(54) **Liquid crystal display and display panel with integrated data-storage**

(30) Priority: 20.02.2007 KR 20070016984
(71) Applicant: Samsung Electronics Co., Ltd., Yeongtong-gu Suwon-city, Gyeonggi-do 442-742 (KR)
(72) Inventor: Choi, Pil-Mo, Seoul (KR); Moon, Kook-Chul, Gyeonggi-do (KR); Maeng, Ho-Suk, Seoul (KR); Shin, Kwang-Sub, Seongnae-dong Gangdong-gu Seoul (KR); Kim, Chul-Ho, Gyeonggi-do (KR); Lee, Sang-Hoon, Seoul (KR); Kim, Kyung-Hoon, Gyeonggi-do (KR); Park, Keun-Woo, Seoul (KR)
(74) Representative: Weitzel, Wolfgang

(57) **Abstract**

A liquid crystal display includes a display panel having a data-storing unit including transistors integrated into the display panel. The data-storing transistors of the data-storing unit may be formed in the same film (layer) as the TFT pixel transistors on the display panel, Each of the plurality of transistors of the data-storing unit includes an input electrode connected to one of a first voltage or a second voltage depending upon a bit of stored data, and an output electrode commonly connected to a data output terminal of the data-storing unit. The data-storing unit further includes and a Serial-In, Parallel-Out shift register supplied with a reset and first and second clock signals and connected to the input electrodes of the transistors, respectively.

## Description

### BACKGROUND OF THE INVENTION

### (a) Field of the Invention

The present invention relates to liquid crystal displays and more particularly to a display panel having an integrated data-storage unit.

### (b) Description of the Related Art

A typical liquid crystal display (LCD) includes two opposing panels having pixel electrodes (attached to specific pixels) and a common electrode (common to all pixels), and a liquid crystal layer therebetween having dielectric anisotropy interposed. The pixel electrodes are arranged in a matrix and connected to switching devices such as thin film transistors (TFTs). Data voltages are applied sequentially in to pixels row by row. The common electrode is disposed over the entire surface of one panel and applies a common voltage to all pixels in the matrix, The pixel electrodes, the common electrode, and the liquid crystal layer interposed therebetween constitute a liquid crystal capacitor. The liquid crystal capacitor together with the switching element (e.g., TFT) connected thereto becomes a unit of a pixel. In the LCD, voltages are applied to the two electrodes connected each pixel to generate an electric field at across the liquid crystal layer, and the strength of the electric field is controlled to control the transmittance of light that passes through the liquid crystal layer, thus obtaining desired images. In this case, in order to prevent a degradation, generated as the electric field is applied for alternating times long time in one direction to the liquid crystal layer and then the opposite direction. The polarity of the data voltages with respect to the common voltage is inverted by frames, by rows, or by pixels.

Small sized LCD display devices are typically used for mobile phones, etc., and dual display devices having outer and inner display panels are being actively developed.

The dual display devices include a main display unit that is mounted on the inside, a sub-display unit that is mounted on the outside, a driving FPC (flexible printed circuit film) that has wires that transmit signals from an external device, a main FPC disposed between the driving FPC and the main display panel, a sub-FPC disposed between the main display panel and the sub-display panel, and an integrated chip controlling the above elements.

The integrated chip generates control signals and driving signals for the main and sub-display panels, and is typically mounted on the main display device by a chip-on-glass (COG) technique. Since the driving FPC connects an external device and the LCD, the driving FPC is also called an interface FPC.

Data about the manufacturer, the year of manufacture, or simple display panel information is stored in the LCD using a data-storing element such as a read-only memory (ROM).

After being manufactured as a separate IC (integrated circuit), the data-storing element is mounted on the main display unit by the COG technique like the integrated chip. Alternatively, the data-staring element is built into the integrated chip.

However, when the data-storing element is manufactured as the IC, manufacturing cost of the LCD increases and separate driving voltages are required for driving the IC.

In addition, when the data-storing element is built into the integrated chip, the size of the chip increases.

### SUMMARY OF THE INVENTION

A first aspect of the invention provides a method of manufacturing a liquid crystal display having an integrated data-storage. The method comprises: providing a first display panel and forming a first plurality of transistors and a second plurality of transistors in a thin film on the first display panel, wherein the first plurality of transistors are pixel transistors arranged in a matrix, and the second plurality of transistors perform data-storage. The second plurality of transistors of the data-storing unit includes N transistors corresponding to N bits of data to be stored, wherein N is a natural number, Each of the N transistors is configured to have its input terminal (electrode) connected to one of a first voltage and a second voltage according to one corresponding bit of the data. Each of the N transistors has an output terminal (electrode) commonly connected to a data output terminal of the data-storing unit. The second plurality of transistors of the data-storing unit further includes transistors interconnected to form a serial-in parallel-out shift register, the outputs of the shift register being connected to the input terminals of the N transistors.

Another aspect of the present invention provides, a liquid crystal display that includes a display panel having a plurality of pixels, and a data-storing unit integrated into the display panel. The data-storing unit includes a plurality of transistors, each having an input terminal connected to a first voltage or a second voltage and an output terminal connected to a data output terminal, and a Serial-In, Parallel-Out (SIPO) shift register formed of a plurality of registers (flip flops) connected in series, and supplied with a reset and first and second clock signals and connected to the input terminals of the transistors, respectively.

The data-storing unit may include a first pin that receives the reset signal and a second pin connected to the data output terminal.

The first and second clock signals may be generated based on a clock signal used in an SPI (serial peripheral interface), or may be generated based on a write/read signal used in a CPU I/F,

The liquid crystal display may further include a gate driver applying gate signals to the pixels and supplying third and fourth clock signals. The first and second clock signals may be generated based on the third and fourth clock signals.

The display panel may include a first display panel and a second display panel that is smaller than the first display panel, and the data-storing unit may be integrated into the first display panel.

The first and second clock signals may have phases opposite to each other.

According to another embodiment of the present invention, a display panel includes a plurality of gate lines, a plurality of data lines, a plurality of pixels connected to the gate lines and the data lines, and a data-storing unit, wherein the data-storing unit includes a plurality of transistors, each with an input terminal connected to a first voltage or a second voltage. Each of the plurality of transistors of the data-storing unit has an output terminal connected to a data output terminal, and a shift register formed of a plurality of registers (flip-flops) supplied with a reset signal and at least two clock signals and connected to the input terminals of the transistors, respectively.

The present invention will be described more fully hereinafter with reference to the accompanying drawings, in which exemplary embodiments of the present invention are shown. This invention may, however, be embodied in many different forms and should not be construed as limited to the exemplary embodiments set forth herein. Like numerals refer to like elements throughout. It will be understood that when an element such as a layer, film, region, substrate, or panel is referred to as being "on" another element, it can be directly on the other element or intervening elements may also be present. In contrast, when an element is referred to as being "directly on" another element, there are no intervening elements present. As used herein, the term "and/or" includes any and all combinations of one or more of the associated listed items. It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present invention.

The terminology used herein is for the purpose of describing particular embodiments only and is not intended to be limiting of the invention. As used herein, the singular forms "a", "an", and "the" are intended to include the plural forms as well, unless the context clearly indicates otherwise. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. Embodiments of the present invention are described herein with reference to cross-sectional illustrations that are schematic illustrations of idealized embodiments of the present invention. As such, variations from the shapes of the illustrations as a result, for example, of manufacturing techniques and/or tolerances, are to be expected. Thus, embodiments of the present invention should not be construed as limited to the particular shapes of regions illustrated herein but are to include deviations in shapes that result, for example, from manufacturing, As an example, a region illustrated or described as flat may, typically, have rough and/or nonlinear features. Moreover, sharp angles that are illustrated may be rounded, Thus, the regions illustrated in the figures are schematic in nature and their shapes are not intended to illustrate the precise shape of a region and are not intended to limit the scope of the present invention.

### BRIEF DESCRIPTION OF THE DRAWINGS

Exemplary embodiments of the present invention will be described in detail with reference to the accompanying drawings for clear understanding of advantages of the present invention, wherein:
FIG. 1 is a block diagram of an LCD according to an exemplary embodiment of the present invention;
FIG. 2 is an equivalent circuit diagram of a pixel of the LCD of FIG. 1;
FIGS. 3A and 3B are schematic diagrams of an LCD according to an exemplary embodiment of the present invention;
FIG. 4 is a block diagram of a data-storing unit according to an exemplary embodiment of the present invention; and
FIG. 5 is a timing diagram of signals applied to the data-storing unit of FIG. 4.

### DETAILED DESCRIPTION OF EXEMPLARY EMBODIMENTS OF THE INVENTION

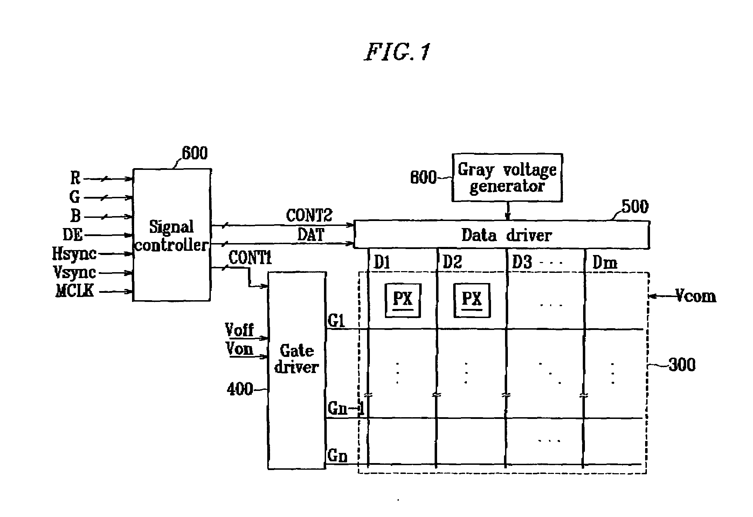

An LCD according to an exemplary embodiment of the present invention now will be described in detail with reference to FIGS. 1, 2, 3A and 3B.

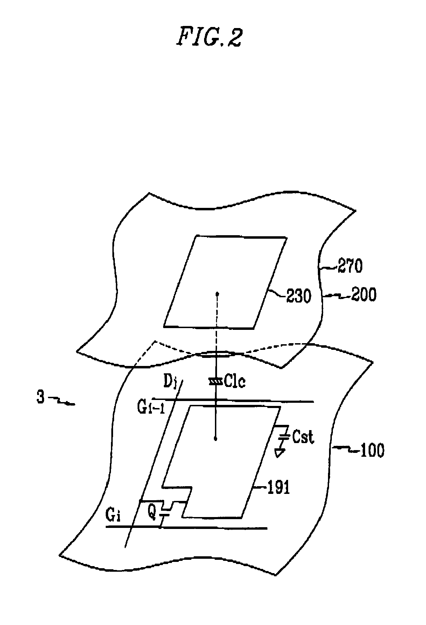

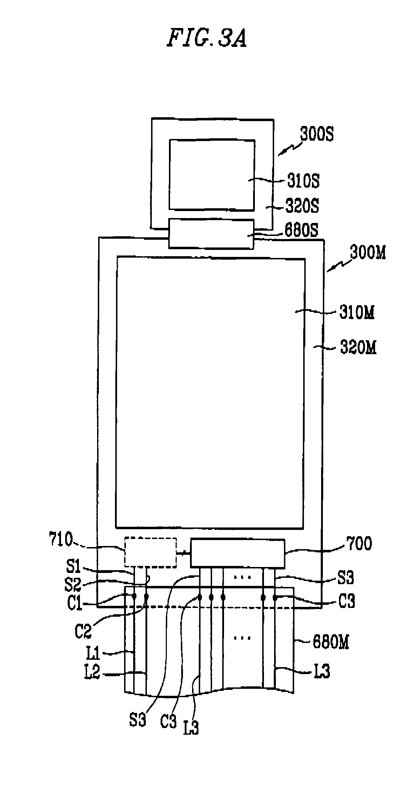

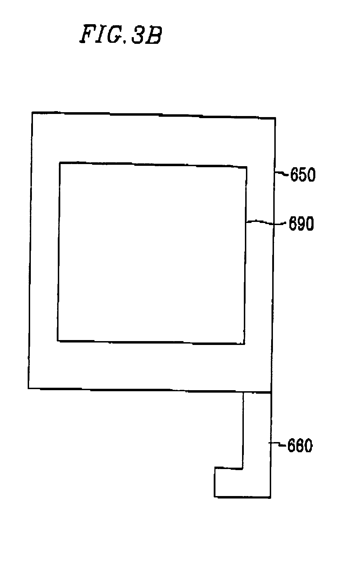

FIG. 1 is a block diagram of anLCD according to an exemplary embodiment of the present invention, FIG. 2 is an equivalent circuit diagram of a pixel of the LCD of FIG. 1, and FIGS. 3A and 3B are schematic diagrams of an LCD according to an exemplary embodiment of the present invention.

Referring to FIG. 1, an LCD includes a liquid crystal (LC) panel assembly 300, a gate driver 400 and a data driver 500 that are coupled with the panel assembly 300, a gray voltage generator 800 coupled with the data driver 500, and a signal controller 600 controlling the above elements.

The panel assembly 300 includes a plurality of signal lines G₁-Gₙ, D₁-Dₘ, and S1-S3. a plurality of pixels PX connected to the signal lines G₁-Gₙ and D₁-Dₘ and arranged substantially in a matrix, and a data-storing unit 710 connected to the signal lines S1 and S2. The matrix of pixels is contained within a display area that is defined (bounded) by a black matrix.

In the structural view shown in FIG. 2, the panel assembly 300 includes lower and upper panels 100 and 200 facing each other and an LC layer 3 interposed between the panels 100 and 200.The signal lines include a plurality of gate lines G₁-Gₙ transmitting gate signals (also referred to as "scanning signals" hereinafter) and a plurality of data lines D₁-Dₘ transmitting data voltages. The signal lines also include a reset signal input line S1 receiving a reset signal, a data output line S2 outputting data, and a plurality of signal lines S3 transmitting control signals and data to the signal controller 600, etc. The gate lines G₁-Gₙ extend substantially in a row direction and substantially parallel to each other, while the data lines D₁-Dₘ extend substantially in a column direction and substantially parallel to each other.

Referring to FIG. 2, each pixel PX, for example a pixel PX connected to the i-th gate line G₁ (i=1, 2, ..., n) and the j-th data line Dⱼ (j=1,2,...., m), includes a switching element Q connected to the signal lines Gᵢ and Dⱼ, and an LC capacitor Clc and a storage capacitor Cst that are connected to the switching element Q. The storage capacitor Cst may be omitted.

The switching element Q is disposed on the lower panel 100 and has three terminals, i,e., a control terminal connected to the gate line Gᵢ, an input terminal connected to the data line Dⱼ. and an output terminal connected to the LC capacitor Clc and the storage capacitor Cst.

The LC capacitor Clc includes a pixel electrode 191 disposed on the lower panel 100 and a common electrode 270 disposed on the upper panel 200 as two terminals. The LC layer 3 disposed between the two electrodes 191 and 270 functions as the dielectric of the LC capacitor Clc. The pixel electrode 191 is connected to the switching element Q The common electrode 270 is supplied with a common voltage Vcom and covers the entire surface of the upper panel 200. Alternatively, unlike as shown in FIG. 2, the common electrode 270 may be provided on the lower panel 100, and at least one of the electrodes 191 and 270 may have a shape of a bar or a stripe.

The storage capacitor Cst is an auxiliary capacitor for the LC capacitor Clc. The storage capacitor Cst includes the pixel electrode 191 and a separate signal line, which is provided on the lower panel 100, overlaps the pixel electrode 191 separated by an insulator, and is supplied with a predetermined voltage such as the common voltage Vcom. Alternatively, the storage capacitor Cst includes the pixel electrode 191 and an adjacent gate line called a previous gate line, which overlaps the pixel electrode 191 separated by an insulator.

The data-storing unit 710 is operated based on the reset signal transmitted through the reset signal input line S1, and outputs to the outside digital data that is stored therein through the data output line S2. In this exemplary embodiment, the data-storing unit 710 may be a ROM (read-only memory).

In a color display, each pixel uniquely represents one of the three primary colors (i.e., spatial division) or each pixel sequentially represents each of the three primary colors (i.e., temporal division) such that a spatial or temporal sum of the primary colors is recognized as a desired color. An example of a set of primary colors includes red, green, and blue, FIG, 2 illustrates an example of the spatial division type pixel in which each pixel includes a color filter 230 representing one of the primary colors in an area of the upper panel 200 facing the pixel electrode 191. Alternatively, the color filter 230 is provided on or under the pixel electrode 191 on the lower panel 100.

One or more polarizers (not shown) are attached to the panel assembly 300.Meanwhile, referring to FIGS, 3A and 3B, the LCD according to this embodiment includes two display panels: a main display panel 300M and a sub-display panel 300S. Each of the display panels 300M and 300S includes black matrixes 320M and 320S defining display areas 310M and 310S, The pixels PX are disposed within the display areas 310M and 310S and are connected to and the signal lines G₁-Gₙ, D₁-Dₘ (not shown). In each of the main display panel 300M and the sub-display panel 300S, the upper panel 200is smaller than the lower panel100, and regions of the lower panel 100 are exposed. The data lines D₁-Dₘ are extended through the exposed regions of the lower panels 100 to connect to the data driver 500 (see FIG. 1).

The main and sub-display panels 300M and 300S are connected to each other through an auxiliary FPC 680S. A main FPC 680M is attached on the bottom of the main display panel 300M, and is also attached to a driving FPC 650.

The main FPC 680M includes a reset signal input wire L1 connected to the reset signal input line S1, a data output wire L2 connected to the data output line S2, and a plurality of signal line wires L3 connected to signal lines S3.

The wires L1-L3 formed on the main FPC 680M are connected to the reset signal input line S1, the data output line S2, and the signal lines S3 through contacts C1, C2, and C3, respectively. The ends of the reset signal input line S1, the data output line S2, and the signal lines S3, and the ends of the reset signal input wire L1, the data output wire L2, and the signal line wire L3 have pads, respectively, and the contacts C1-C3 are formed by connecting the pads,

In FIG. 3B, the driving FPC 650 is called an interface FPC, and includes wires (not shown) that transmit signals and pads (not shown) on the ends of the wires. As described above, the main and sub-FPCs 680M and 680S contact the pads of the driving FPC 650 and each of the display panels 300M and 300S have pads. The driving FPC 650 includes an opening 690 on which the sub-display panel 300S is positioned during assembly.

The pads of the driving FPC 650, the pads of the main FPC 680M and sub-FPC 680S, and the pads of each of the display panels 300M and 300S are electrically connected to each other by an ACF (anisotropic conductive film) or by soldering,

Referring to FIG. 1 again, the gray voltage generator 800 generates a full number of gray voltages or a limited number of gray voltages (referred to as "reference gray voltages" hereinafter) related to the transmittance of the pixels PX. Half of the (reference) gray voltages have a positive polarity relative to the common voltage Vcom, while the other half of the (reference) gray voltages have a negative polarity relative to the common voltage Vcom.

The gate driver 400 is a shift register that includes a plurality of stages (not shown) arranged in a cascade and each of the stages is connected to a portion of the gate lines G₁-Gₙ. The gate driver 400 receives a scanning start signal STV, a plurality of clock signals, and a gate-off voltage Voff, and synthesizes a gate-on voltage Von and the gate-off voltage Voff to generate the gate signals for application to the gate lines G₁-Gₙ.

The data driver 500 is connected to the data lines D₁-Dₘ of the panel assembly 300 and applies data voltages, which are selected from among the gray voltages supplied from the gray voltage generator 800, to the data lines D₁-Dₘ. Alternatively, the gray voltage generator 800 generates only a few of the reference gray voltages rather than all the gray voltages, and the data driver 500 may divide the reference gray voltages to generate the data voltages from among the provided reference gray voltages.

The signal controller 600 controls the gate driver 400, the data driver 500, etc.

As shown in FIG, 3A, the signal controller 600, the gate driver 400, the data driver 500, and the gray voltage generator 800 are implemented as an integrated chip 700 that is mounded on the main display panel 300M by a COG technique,

The integrated chip 700 receives external signals through an input portion 660 (FIG. 3B), and supplies processed signals to the main and sub-display panels 300M and 300S through the wires formed on the driving FPC 650.

The operation of the above-described LCD will now be described in detail.

The signal controller 600 is supplied with input image signals R, G, and B and input control signals for controlling the display thereof from an external graphics controller (not shown), The input image signals R, G, and B contain luminance information of pixels PX, and the luminance has a predetermined number of grays, for example 1024 (=2¹⁰), 256 (=2⁸), or 64 (=2⁶) grays. The input control signals include a vertical synchronization signal Vsync, a horizontal synchronization signal Hsync, a main clock signal MCLK, and a data enable signal DE.

Based on the input control signals and the input image signals R, G, and B, the signal controller 600 generates gate control signals CONT1 and data control signals CONT2 and processes the image signals R, G, and B to be suitable for the operation of the panel assembly 300 and the data driver 500. The signal controller 600 sends the gate control signals CONT1 to the gate driver 400 and sends the processed image signals DAT and the data control signals CONT2 to the data driver 500.

The gate control signals CONT1 include a scanning start signal STV for instructing the gate driver 400 to start scanning and at least one clock signal for controlling the output period of the gate-on voltage Von. The gate control signals CONT1 may include an output enable signal OE for defining the duration of the gate-on voltage Von.

The data control signals CONT2 include a horizontal synchronization start signal STH for initiating the start of data transmission for a row of pixels PX, a load signal LOAD for applying the data voltages to the data lines D₁-Dₘ, and a data clock signal HCLK, The data control signal CONT2 may further include an inversion signal RVS for reversing the polarity of the data voltages (relative to the common voltage Vcom).

In response to the data control signals CONT2 from the signal controller 600, the data driver 500 receives a packet of the digital image signals DAT for a row of pixels PX from the signal controller 600, converts the digital image signals DAT into analog data voltages selected from the gray voltages, and applies the analog data voltages to the data lines D₁-Dₘ.

The gate driver 400 applies the gate-on voltage Von to a gate line G₁-Gₙ in response to the gate control signals CONT1 from the signal controller 600, thereby turning ON the switching transistors Q connected thereto. The data voltages applied to the data lines D₁-Dₘ are then supplied to the pixels PX through the activated (ON) switching transistors Q.

A difference between a data voltage and the common voltage Vcom applied to a pixel PX is represented as a voltage across the LC capacitor Clc of the pixel PX, which is referred to as a pixel voltage. The LC molecules in the LC capacitor Clc assume orientations controlled by the magnitude of the pixel voltage, and the molecular orientations determine the polarization of light passing through the LC layer 3, The polarizer(s) converts light polarization to light transmittance such that the pixel PX has a luminance represented by a gray level indicated by the data voltage.

By repeating this procedure each unit of a horizontal period (which is also referred to as "1H" and is equal to one period of the horizontal synchronization signal Hsync and the data enable signal DE), all gate lines G₁-Gₙ are sequentially supplied with the gate-on voltage Von, thereby applying the data voltages to all pixels PX to display an image for a frame.

When the next frame starts after one frame finishes, the inversion signal RVS applied to the data driver 500 is controlled so that the polarity of the data voltages is reversed (which is referred to as "frame inversion"). The inversion signal RVS may also be controlled such that the polarity of the data voltages flowing in a data line are periodically reversed during one frame (for example row inversion and dot inversion), or the polarity of the data voltages in one packet are reversed (for example column inversion and dot inversion),

The data stored in the data-storing unit 710 is read by a device (not shown) connected thereto.

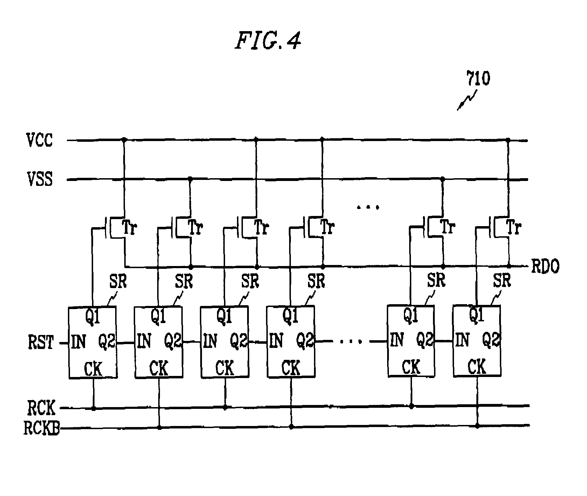

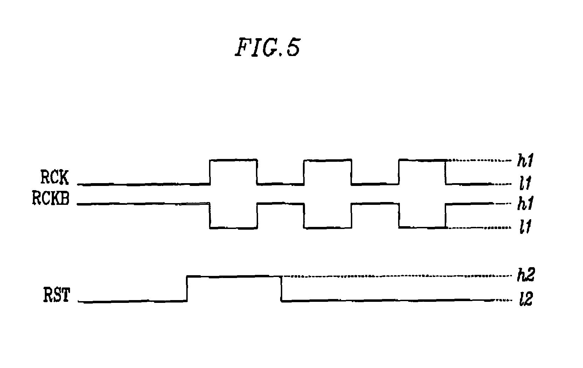

Referring to FIGS. 4 and 5, the data-storing unit 710 of this embodiment will now be described in detail.

FIG. 4 is a block diagram of a data-storing unit according to an exemplary embodiment of the present invention, and FIG. 5 is a timing diagram of signals applied to the data-storing unit shown in FIG. 4.

Referring to FIG. 4, the data-storing unit 710 includes a plurality of transistors Tr and a plurality of registers SR arranged and interconnected to form a Serial-In, Parallel-Out (SIPO) shift register, each register SR having an output connected to a corresponding one of the transistors Tr.

The transistors Tr are three-terminal elements such as TFTs (thin film transistors), with a control terminal (transistor gate) connected to an output terminal of the corresponding register SR, an input terminal connected to either a first voltage VCC or to a second voltage VSS depending upon a bit of stored data, and an output terminal connected to a data output terminal RDO. The sequence of the connections between the input terminals of the transistors Tr and either the voltage VCC or VSS defines the stored data in the data-storing unit 710. In other words, stored data is encoded (hard-wired) into the connections between the input terminals of the transistors Tr and the voltage VCC or VSS. The magnitude of the first voltage VCC is larger than that of the second voltage VSS, and the first voltage VCC is a high level voltage and corresponds to a logic value "1", and the second voltage VSS is a low level voltage and corresponds to a logic value "0".

The first and second voltages VCC and VSS may be voltages used in the integration chip 700 without application of a separate voltage from the outside.

Each of the registers SR includes a clock terminal CK, an input terminal IN, and (non-inverted) output terminals Q1 and Q2. Except for the first and last registers SR, the connections of the remaining registers SR are the same. Thus, in the middle transistors Tr, the input terminal IN is connected to the output terminal Q2 of the immediately previous transistor Tr, the clock terminal CK is connected to one of a first clock signal RCK and a second clock signal RCKB, and the output terminal Q1 is connected to the input terminal of the corresponding transistor Tr, respectively. As shown in FIG. 4, the clock terminals CK of odd-numbered registers SR are connected to the first clock signal RCK, and the clock terminals CK of even-numbered registers SR are connected to the second clock signal RCKB, but this may be modified in various alternative embodiments.

However, the input terminal IN of the first register SR is connected to a reset signal RST, and the output terminal Q2 of the last register SR is not connected. Except for the above connections of the first and last registers SR, the connections of the terminals CK, Q1, and Q2 of the first and last registers SR are the same as those of the middle registers SR.

The transistors Tr and the registers SR may be integrated into the LC panel assembly 300 along with (e,g., on the same thin film layer as) the TFT switching elements Q.

Referring to FIG. 4, the first and second clock signals RCK and RCKB each have a high level voltage h1 and a low level voltage I1, and phases of the voltages h1 and I1 are opposite to each other. The reset signal RST also has a high level voltage h2 and a low level voltage 12.

When the LCD uses an SPI (serial peripheral interface), the first and second clock signals RCK and RCKB may be generated based on a clock signal that is applied to the SPI. The Serial Peripheral interface Bus or SPI bus is a synchronous serial data link standard designed by Motorola, Inc. that operates in full duplex mode. Devices communicate in master/slave mode where the master device initiates the data frame. Alternatively, when the LCD uses a CPU I/F (central processing unit interface), the first and second clock signals RCK and RCKB may be generated based on a write/read (W/R) signal.

In addition, the first and second clock signals RCK and RCKB may be generated using clock signals that are applied to the gate driver 400 for generating the gate signals. As a result, since the first and second clock signals RCK and RCKB used in the data-storing unit 710 may be generated using internal signals of the LCD without the application of separate signals from the outside, the data-storing unit 710 receives the reset signal RST through the reset signal input line S1 and outputs data through the data output line S2 that is connected to the data output terminal RDO. Accordingly, the data-storing unit 710 needs only two pins, one for the reset signal input line S1 and one for the data output line S2.

The operation of the above data-storing unit 710 will now be described.

As shown in FIG, 5, when the reset signal RST of the high level voltage h2 is applied to the input terminal IN of the first register SR, the first register SR operates. Thus, when a level of the first clock signal RCK is the high level voltage h1, the first register SR outputs a high level voltage to the corresponding transistor Tr and to the input terminal IN of a subsequent (e.g., second) register SR through the output terminals Q1 and Q2, respectively. The maintain time of the high level voltage outputted to the output terminals Q1 and Q2 is substantially the same as pulse widths of the clock signals RCK and RCKB.

Thus, the first transistor Tr is turned ON, and the corresponding voltage applied to the input terminal of the first transistor Tr, (for example the first voltage VCC), is transmitted to the data output terminal RDO to output a logic value (e.g., "1").

As described above, the high level voltage from the output terminal Q2 of the first register SR is applied to the input terminal IN of the second register SR that is a subsequent stage and functions as a carry signal.

In synchronization with the carry signal, the second register SR operates to output a high level voltage to the output terminals Q1 and Q2 while the second clock signal RCKB outputs the high level voltage h1, and thereby a corresponding second transistor Tr is turned ON. By the turn-on of the second transistor Tr, a corresponding voltage, (for example the second voltage VSS), is transmitted to data output terminal RDO to output a logic value (e.g., "0").

The plurality of registers SR, (the first register SR to the last register SR), are sequentially activated (i,e., sequentially output a logic high "1" voltage), and thereby the corresponding transistors Tr are sequentially turned ON. The first voltage VCC or the second voltage VSS applied to the input terminal of each turned-on transistor Tr is sequentially output to the data output terminal RDO.

In FIG. 4, data output to the data output terminal RDO is "1011...01", and thus "1011...01" is the data stored in the data-storing unit 710.

At this time, in order to prevent data from being incorrectly output to the data output terminal RDO due to operation overlapping of the next adjacent registers SR, the data-storing unit 710 may output data only in synchronization with the data enable signal DE.

According to exemplary embodiments of the present invention, when data about the manufacturer, the date of manufacture or information about the display panel is stored in the LCD, the data-storing unit is integrated into the LC panel assembly (e.g., on the same layer as the TFTs). Since clock signals that are required for driving the data-storing unit are generated based on signals already provided and used in the LCD panels, the number of pins for inputting/outputting signals or data is reduced.

Since it is not necessary for a separate data-storing unit to be manufactured or mounted onto the LC panel assembly or built into an integrated chip, manufacturing costs decrease and the size of the integrated chip is not increased.

While this invention has been described in connection with what is presently considered to be the most practical exemplary embodiments, it is to be understood that the invention is not limited to the disclosed embodiments, but, on the contrary, is intended to cover various modifications and equivalent arrangements included within the spirit and scope of the appended claims.

## Claims

1. A liquid crystal display comprising:
a first display panel having a plurality of pixels; and
a data-storing unit integrated into the first display panel and storing data, wherein the data-storing unit comprises a plurality of transistors, each transistor configured to have its input electrode connected to one of a first voltage and a second voltage according to a corresponding bit of the data and
its output electrode connected to a common data output terminal.

2. The liquid crystal display of claim 1, the data-storing unit further comprises a shift register supplied with a reset signal and first and second clock signals and connected to the gate electrodes of the transistors, respectively.

3. The liquid crystal display of claim 2, wherein the first and second clock signals are generated based on a clock signal used in an SPI (serial peripheral interface).

4. The liquid crystal display of claim 2, wherein the first and second clock signals are generated based on a write/read signal used in CPU I/F.

5. The liquid crystal display of claim 2, further comprising a gate driver configured to apply gate signals to the pixels and supplied with third and fourth clock signals, and the first and second clock signals are generated based on the third and fourth clock signals.

6. The liquid crystal display of claim 2, wherein the first and second clock signals have phases opposite to each other.

7. The liquid crystal display of claim 1, further comprising a second display panel smaller than the first display panel.

8. The liquid crystal display of claim 1, wherein the data-storing unit comprises a first pin configured to receive the reset signal and a second pin connected to the data output terminal.

9. The liquid crystal display of claim 1, wherein each pixel includes a thin film transistor, and the plurality of TFTs are formed in a film layer on the first display panel; and
wherein the plurality of transistors of the data-storing unit are formed on the same film layer on the first display panel.

10. A display panel comprising:
a plurality of gate lines;
a plurality of data lines;
a plurality of pixels connected to the gate lines and the data lines; and
a data-storing unit configured to store data,
wherein each pixel includes a thin film transistor (TFT), and the plurality of TFTs are formed in a film layer on the first display panel; and the data-storing unit comprises a plurality of transistors formed on the same film layer on the first display panle, each having an input electrode connected to one of a first voltage and a second voltage according to the data.

11. The liquid crystal display of claim 10, the data-storing further comprises a shift register connected to the input electrodes of the plurality of transistors of the data-storing unit.

12. The liquid crystal display of claim 11, wherein the shift register is supplied with a reset signal and two complementary clock signals.

13. The liquid crystal display of claim 10, wherein each of the plurality of transistors of the data-storing unit has an output electrode commonly connected to a data output terminal of the data-storing unit.

14. A method of making a liquid crystal display including a data-storage unit, the method comprising:
providing a first display panel
forming a first plurality of transistors and a second plurality of transistors in a thin film on the first display panel, wherein the first plurality of transistors are pixel transistors arranged in a matrix, and the second plurality of transistors comprise a data-storage unit.

15. The method of claim 14, wherein the second plurality of transistors of the data-storing unit includes N transistors corresponding to N bits of data to be stored, wherein N is a natural number.

16. The method of claim 15, wherein each of the N transistors is configured to have its input electrode connected to one of first voltage and to a second voltage according to one corresponding bit of the data.

17. The method of claim 16, wherein each of the N transistors further has an output electrode commonly connected to a data output terminal of the data-storing unit.

18. The method of claim 14, wherein the second plurality of transistors of the data-storing unit further includes transistors interconnected to form a serial-in parallel-out shift register, the outputs of the shift register being connected to the input electrodes of the N transistors.
